# EUROPEAN PATENT SPECIFICATION

(11) **EP 3 169 105 B1**
(45) Date of publication and mention of the grant of the patent: **12.08.2020**
(21) Application number: 15194023.6
(22) Date of filing: 11.11.2015
(51) Int. Cl.: H04W 48/00

(54) **METHOD, MOBILE TERMINAL AND NETWORK ELEMENT FOR ESTABLISHING A COMMUNICATION CONNECTION, PREFERABLY AN IP AND/OR DATA CONNECTION, BETWEEN A MOBILE TERMINAL IN A MOBILE COMMUNICATION NETWORK AND A SERVICE PROVIDER IN A DATA COMMUNICATION NETWORK**
VERFAHREN, MOBILES ENDGERÄT UND NETZWERKELEMENT ZUM AUFBAUEN EINER KOMMUNIKATIONSVERBINDUNG, VORZUGSWEISE EINE IP- UND/ODER DATENVERBINDUNG, ZWISCHEN EINEM MOBILEN ENDGERÄT IN EINEM MOBILKOMMUNIKATIONSNETZWERK UND EINEM DIENSTANBIETER IN EINEM DATENKOMMUNIKATIONSNETZWERK
PROCÉDÉ, TERMINAL MOBILE ET ÉLÉMENT DE RÉSEAU POUR ÉTABLIR UNE CONNEXION DE COMMUNICATION, DE PRÉFÉRENCE UNE LIAISON DE DONNÉES ET/OU IP, ENTRE UN TERMINAL MOBILE DANS UN RÉSEAU DE COMMUNICATION MOBILE ET UN FOURNISSEUR DE SERVICES DANS UN RÉSEAU DE COMMUNICATION DE DONNÉES

(43) Date of publication of application: 17.05.2017
(73) Proprietor: Vodafone GmbH, 40549 Düsseldorf (DE)
(72) Inventor: Lu, Yang, 40489 Düsseldorf (DE); Wild, Peter, 47807 Krefeld (DE); Caldenhoven, Jürgen, 40547 Düsseldorf (DE)
(74) Representative: Weisbrodt, Bernd

(56) References cited:
- WO-A1-2013/072403
- US-A1- 2011 177 811

## Description

The invention relates to a method for establishing a communication connection, preferably an IP and/or data connection, between a mobile terminal in a mobile communication network and a service provider in a data communication network.

The invention further relates to a mobile communication network, which is adapted to perform the method steps according to the invention performed by a network element and a mobile terminal.

A communication connection between a mobile terminal in a mobile communication network and a service provider in a data communication network is established via a gateway between the mobile communication network and the data communication network. The present method for establishing such a communication connection between the mobile terminal in the mobile communication network and the service provider in the data communication network according to the 3GPP standard TS 24.301 uses pre-defined access point names (APNs) to define the gateway, particularly a packet data network gateway (PGW), between the mobile communication network and the data communication network.

The APNs are pre-configured in the universal subscriber identity module (USIM) of the mobile terminal and the network element, like the home subscriber server (HSS) or the mobility management entity (MME), of the mobile communication network. The network element of the mobile communication network receives a request for establishing the communication connection between the mobile terminal in the mobile communication network and the service provider in the data communication network from the mobile terminal. This request comprises one of the APNs pre-configured in the USIM of the mobile terminal. Since the APNs are also pre-defined in the network element of the mobile communication network, the network element can define the gateway for the communication connection between the mobile terminal in the mobile communication network and the service provider in the data communication network based on the APN of the received request. The network element of the mobile communication network establishes the communication connection between the mobile terminal in the mobile communication network and the service provider in the data communication network vie the gateway defined by the APN of the received request. Thus, the gateway for the established communication connection is limited to the pre-defined APNs and static for the whole lifetime of the communication connection.

To distribute data traffic originating from different applications of the mobile terminal to different gateways the operator of the mobile communication network has to administer multiple APNs in the USIM of the mobile terminal and the network elements of the mobile communication network, so that multiple communication connections via individual gateways can be established.

WO 2013/072403 A1 discloses a method for supporting Packet Data Network (PDN) connectivity of a mobile terminal in a mobile operator network, wherein the mobile terminal is capable of establishing PDN connections via different anchor points in the core network, comprising the steps of: the mobile terminal initiating a process for establishing an IP session with a target node with respect to an application, and performing a decision process in which a suitable anchor point for establishing a PDN connection for said IP session is selected by taking into consideration at least one of application type information and E2E connection information according to configurable selection rules.

It is an object of the present invention to provide a flexible method for establishing a communication connection, preferably an IP and/or data connection, between a mobile terminal in a mobile communication network and a service provider in a data communication network, particularly with respect to defining the gateway between the mobile communication network and the data communication network.

The object is achieved by a method for establishing a communication connection, preferably an IP and/or data connection, between a mobile terminal in a mobile communication network and a service provider in a data communication network, comprising the steps of:
- sending, from an application running on the mobile terminal, a request for establishing the communication connection between the mobile terminal in the mobile communication network and the service provider in the data communication network to a network element of the mobile communication network,
- determining, by the network element, the application or type of application requesting the communication connection;
- determining, by the network element, the location of the mobile terminal in the mobile communication network;
- identifying, by the network element, a gateway between the mobile communication network and the data communication network by the network element of the mobile communication network for the requested communication connection by considering the determined application or type of application requesting the communication connection and the determined location of the mobile terminal in the mobile communication network; and
- establishing, by the network element, the requested communication connection between the mobile terminal in the mobile communication network and the service provider in the data communication network by the network element of the mobile communication network via the identified gateway between the mobile communication network and the data communication network,
characterized in that
different applications with similar requirements regarding communication connections are grouped by the network element to a type of application, and
establishing the requested communication connection comprises the network element sending a request to the identified gateway to establish a communication connection between the network element and the gateway for establishing a bearer between the network element and the gateway.

According to the invention the application or type of application requesting the communication connection between the mobile terminal in the mobile communication network and the service provider in the data communication network is determined. Further, the location of the mobile terminal in the mobile communication network is determined. Using this determined information the network element of the mobile communication network can dynamically identify a gateway to the data communication network in which the service provider is located. For example the application or type of application specifies the type of the required communication connection, e.g. voice, data, video, and so on. The location of the mobile terminal in the mobile communication network can be for example used to identify a gateway which is close to the mobile terminal.

Thus, in contrast to the currently used methods for establishing the communication connection between the mobile terminal in a mobile communication network and the service provider in the data communication network the method according to the invention does not base on pre-defined and pre-configured APNs. Instead, the present invention dynamically identifies the gateway between the mobile communication network and the data communication network for every request for establishing the communication connection between the mobile terminal in the mobile communication network and the service provider in the data communication network originating from an application or type of application of the mobile terminal.

For every request received at the network element of the mobile communication network a gateway between the mobile communication network and the data communication network is identified by the method according to the invention. Because of the different applications or types of application usually running on a mobile terminal the requested communication connections will be established via several gateways since different applications or types of applications have different requirements with respect to the requested communication connection. Thus, an automatic traffic distribution is achieved by the inventive method.

Further, there is no need to pre-define and pre-configure APNs at the mobile terminal and the network elements of the mobile communication network.

According to the invention the application or type of application requesting the communication connection is determined by the mobile terminal or the network element of the mobile communication network. The mobile terminal can determine the application or type of application because the application is running on the mobile terminal and thus, the mobile terminal has all relevant information of the application. The network element of the mobile communication network can determine the application or type of application by analyzing the request for establishing the communication connection between the mobile terminal in the mobile communication network and the service provider in the data communication network because this request is initiated by the application requesting the communication connection between the mobile terminal in the mobile communication network and the service provider in the data communication network.

In an advantageous embodiment of the invention the application or type of application requesting the communication connection between the mobile terminal in the mobile communication network and the service provider in the data communication network is determined by considering the communication address of the service provider, the kind of requested service, the kind of the requested communication connection and/or the name of the application requesting the communication connection. The application or kind of application can be determined by considering the communication address of the service provider if only one service is provided by the service provider under this communication address, like for example the service provider only provides a video service under the communication address. The application or kind of application can be determined by considering the kind of requested service if this kind of requested service is specific for the application or kind of application requesting the communication connection between the mobile terminal in the mobile communication network and the service provider in the data communication network. The application or kind of application can be further determined by considering the kind of the requested communication connection if this kind of requested communication connection is specific for the application or kind of application requesting the communication connection between the mobile terminal in the mobile communication network and the service provider in the data communication network, like for example a voice connection which is at least specific for a certain type of application. Further, the application or kind of application can be determined by considering the name of the application requesting the communication connection between the mobile terminal in the mobile communication network and the service provider in the data communication network. According to the invention the application or kind of application can be determined by considering any combination of the aforementioned features.

According to a further advantageous embodiment of the invention the application or type of application is assigned an identifier, wherein the identifier is at least known to the mobile terminal and the network element of the mobile communication network. Thus, only the identifier of the application or kind of application has to be transmitted between the mobile terminal and the network element of the mobile communication network.

In a preferred embodiment of the invention the identifier of the application or type of application requesting the communication connection is assigned by the mobile terminal, the network element of the mobile communication network or the application requesting the communication connection. The mobile terminal and the network element of the mobile communication network each know the identifiers which can be assigned to applications or kind of applications requesting the communication connection between the mobile terminal and the service provider in the data communication network and thus can assign the identifier to the application or type of application requesting the communication connection between the mobile terminal and the service provider in the data communication network. If the application also has knowledge of the identifier assigned to it, the application can directly include this identifier identifying the application or type of application into the request for establishing the communication connection between the mobile terminal in the mobile communication network and the service provider in the data communication network.

According to an embodiment of the invention the network element of the mobile communication network receiving the identifier of the application or type of application requesting the communication connection between the mobile terminal in the mobile communication network and the service provider in the data communication network checks the received identifier of the application or type of application requesting the communication connection. This check at the network element of the mobile communication network guarantees that neither the application nor the mobile terminal can include an identifier into the request for establishing the communication connection between the mobile terminal in the mobile communication network and the service provider in the data communication network which does not belong to the application requesting the communication connection between the mobile terminal in the mobile communication network and the service provider in the data communication network.

In a preferred embodiment of the invention the check of the received identifier of the application or type of application requesting the communication connection between the mobile terminal in the mobile communication network and the service provider in the data communication network bases on the communication address of the service provider, the kind of requested service, the kind of the requested communication connection and/or the name of the application requesting the communication connection. Based on these features the network element of the mobile communication network can easily check whether the identifier of the application or type of application included in the received request for establishing a communication connection between the mobile terminal in the mobile communication network and the service provider in the data communication network corresponds to the application requesting the communication connection between the mobile terminal in the mobile communication network and the service provider in the data communication network or not.

In an advantageous embodiment of the invention the location of the mobile terminal in the mobile communication network is determined by a cell of the mobile communication network where the mobile terminal resides, a GPS position of the mobile terminal transmitted from the mobile terminal to the network element of the mobile communication network and/or a triangulation process using transmission times of transmitted signals. The mobile communication network in which the mobile terminal is located has knowledge about the cell in which the mobile terminal is located. This information, for example the cell-ID, can be used to determine the location of mobile terminal in the mobile communication network. The location of the mobile terminal in the mobile communication network can also be determined using a Global Positioning System (GPS) module of the mobile terminal and forwarding the GPS information to the network element of the mobile communication network. Additionally or alternatively the location of the mobile terminal in the mobile communication network can be determined by a triangulation process using transmission times of transmitted signals, preferably of signals transmitted from the network element of the mobile communication network to the mobile terminal.

According to a preferred embodiment of the invention the gateway between the mobile communication network and the data communication network is identified by the network element of the mobile communication network by considering the determined application or type of application requesting the communication connection between the mobile terminal in the mobile communication network and the service provider in the data communication network and the determined location of the mobile terminal in the mobile communication network with respect to transmission times, latency, available bandwidth, network congestion, number of communication networks and/or network elements involved, quality of service, security characteristics of the communication connection, the real distance between the mobile terminal and the service provider, the capacity and/or current workload of the service provider, or any combination thereof. Depending on the requirements of the application or type of application requesting the communication connection between the mobile terminal in the mobile communication network and the service provider in the data communication network the network element can identify the best gateway considering one or more of the aforementioned characteristics. If for example a voice connection is requested, the transmission time, latency and quality of service are more important than bandwidth and security.

In a preferred embodiment of the invention the gateway between the mobile communication network and the data communication network is dynamically identified by the network element of the mobile communication network for every request for establishing a specific communication connection between the mobile terminal in the mobile communication network and a specific service provider in the data communication network originating from a specific application or type of application of the mobile terminal. Thus, every request for establishing a data connection between a mobile terminal in a mobile communication network and a service provider in a data communication network is handled separately and the most suitable gateway for each requested connection is identified. Because of the different applications or types of application usually running on a mobile terminal the requested communication connections will be established via several gateways since different applications or types of applications have different requirements with respect to the requested communication connection. Thus, an automatic traffic distribution is achieved by the inventive method.

It is inventively provided that different applications with similar requirements regarding communication connections are grouped to a type of application. If applications have similar requirements regarding communication connections these applications are grouped to a type of application, which simplifies the handling at the mobile terminal and the network element of the mobile communication network because not every application has to be considered during the inventive method, it is sufficient if the applications belong to a type of application.

In a preferred embodiment of the invention the mobile communication network is designed according to a telecommunication standard like 2G, 3G, 4G, 5G, Wireless LAN or WiMAX.

In a further preferred embodiment of the invention the network element is a mobility management entity (MME) of a mobile communication network according to the 4G standard.

According to a further preferred embodiment of the invention the gateway between the mobile communication network and the data communication network is a data packet network gateway (PGW) of a mobile communication network according to the 4G standard.

Furthermore, the invention provides a mobile communication network according to claim 14.

Further details, characteristics and advantages of the invention are explained in the following in more detail based on the description of the exemplary embodiments shown in the figures of the drawings.

In these figures:
- Fig. 1: shows schematic view of a system implementing the inventive method;
- Fig. 2: shows a signal flow diagram of the inventive method; and
- Fig. 3: shows a flow diagram of the inventive method.

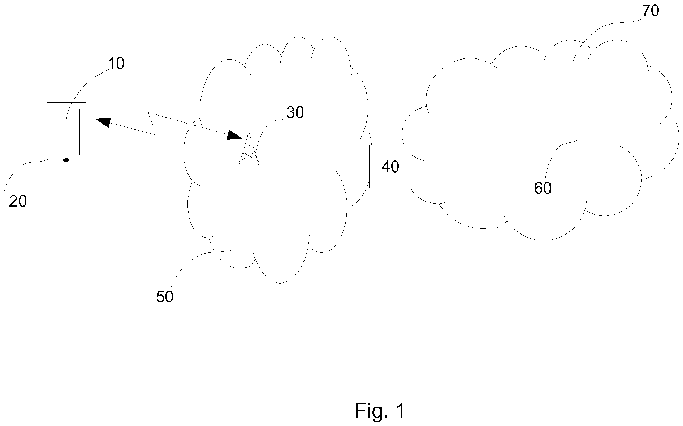

Fig. 1 shows a schematic view of a system implementing the inventive method. The system comprises a mobile communication network 50 and a data communication network 70, which are connected to each via a gateway 40. The mobile communication network comprises one or more network elements 30. Usually each network element 30 provides a so-called mobile radio cell. Mobile terminals 20 located in such a mobile radio cell of a mobile communication network 50 can connect to the network element 30 of the mobile communication network 50 via a radio link. Once connected, the mobile terminal 20 and/or an application 10 running on the mobile terminal 20 can request an establishment of a communication connection for example between the mobile terminal 20 and a service provider 60 in the data communication network 70.

The invention bases on the fact, that the mobile terminal 20 is connected or attached to the mobile communication network 50. The application 10 running on the mobile terminal 20 wants to establish a communication connection, for example an IP and/or data connection, to the service provider 60 in the data communication network 70. Therefore, the application 20 triggers the mobile terminal 20 to send a request for establishing the communication connection between the mobile terminal 20 in the mobile communication network 50 and the service provider 60 in the data communication network 70. The mobile terminal 20 sends the request originating from the application 10 of the mobile terminal 20 to the network element 30 of the mobile communication network 50.

Regarding this request it is determined which application 10 is requesting the communication connection between the mobile terminal 20 and the service provider 60. This determination can be either performed by the mobile terminal 20 or the network element 30 of the mobile communication network 50. If the mobile terminal 20 determines the application 10 requesting the communication connection between the mobile terminal 20 and the service provider 60, the mobile terminal will include the result of this determination into the request send to the network element 30 of the mobile communication network 50.

The application 10 requesting the communication connection between the mobile terminal 20 and the service provider 60 can be for example determined by considering the communication address of the service provider 60, the kind of requested service, the kind of requested communication connection and/or the of the application 10 requesting the communication connection.

According to a preferred embodiment of the invention different applications 10 with similar requirements regarding communication connections are grouped to a type of applications.

To further simplify the determination of the application 10 requesting the communication connection between the mobile terminal 20 and the service provider 60, the application 10 or type of application is assigned an identifier, wherein the identifier is at least known to the mobile terminal 20 and the network element 30 of the mobile communication network 50.

Based on the assigned identifier the application 10 or kind of application can be easily determined. For example the network element 30 of the mobile communication network 50 only has to check the identifier assigned to the application 10 or type of application.

The identifier of the application 10 or type of application requesting the communication connection between the mobile terminal 20 and the service provider 60 can be assigned by the mobile terminal 20, the network element 30 of the mobile communication network 50 or the application 10 requesting the communication connection between the mobile terminal 20 and the service provider 60.

If the network element 30 of the mobile communication network 50 receives the identifier assigned to the application 10 or type of application from the mobile terminal 20 or the application 10, the network element 30 of the mobile communication network 50 checks the received identifier of the application 10 or type of application requesting the communication connection between the mobile terminal 20 and the service provider 60. This check can for example base on the communication address of the service provider 60, the kind of requested service, the kind of requested communication connection and/or the name of the application 10 requesting the communication connection between the mobile terminal 20 and the service provider 60.

After the application 10 or type of application has been determined, the location of the mobile terminal 20 in the mobile communication network 50 is determined. The location of the mobile terminal 20 in the mobile communication network 50 can be determined for example by identifying the cell of the mobile communication network 50 where the mobile terminal 20 resides, by a GPS position of the mobile terminal 20 transmitted from the mobile terminal 20 to the network element 30 of the mobile communication network 50 and/or by a triangulation process using transmission times of transmitted signals.

Considering the determined application 10 or type of application requesting the communication connection between the mobile terminal 20 and the service provider 60 and considering the determined location of the mobile terminal 20 in the mobile communication network 50 the gateway 40 between the mobile communication network 50 and the data communication network 70 can be identified by the network element 30 of the mobile communication network 50.

The gateway 40 between the mobile communication network 50 and the data communication network 70 is identified by the network element 30 of the mobile communication network 50 for example by considering the determined application 10 or type of application requesting the communication connection between the mobile terminal 20 and the service provider 60 and the determined location of the mobile terminal 20 in the mobile communication network 50 with respect to transmission times, latency, available bandwidth, network congestion, number of communication networks and/or network elements involved, quality of service, security characteristics of the communication connection, the real distance between the mobile terminal 20 and the service provider 60, the capacity and/or current workload of the service provider 60 or any combination thereof.

Advantageously the gateway 40 between the mobile communication network 50 and the data communication network 70 is dynamically identified by the network element 30 of the mobile communication network 50 for every request for establishing a specific communication connection between the mobile terminal 20 in the mobile communication network 50 and a specific service provider 60 in the data communication network 70 originating from a specific application 10 or type of application of the mobile terminal 20.

Finally the requested communication connection between the mobile terminal 20 in the mobile communication network 50 and the service provider 60 in the data communication network 70 is established by the network element 30 of the mobile communication network 50 via the identified gateway 40 between the mobile communication network 50 and the data communication network 70.

According to the invention the application 10 or type of application requesting the communication connection between the mobile terminal 20 in the mobile communication network 50 and the service provider 60 in the data communication network 70 is determined. Further, the location of the mobile terminal 20 in the mobile communication network 50 is determined. Using this determined information the network element 30 of the mobile communication network 50 can dynamically identify a gateway 40 to the data communication network 70 in which the service provider 60 is located. For example the application 10 or type of application specifies the type of the required communication connection, e.g. voice, data, video, and so on. The location of the mobile terminal 20 in the mobile communication network 50 can be for example used to identify a gateway 40 which is close to the mobile terminal 20.

In contrast to the currently used methods for establishing the communication connection between the mobile terminal 20 in a mobile communication network 50 and the service provider 60 in the data communication network 70 the method according to the invention does not base on pre-defined and pre-configured APNs. Instead, the present invention dynamically identifies the gateway 40 between the mobile communication network 50 and the data communication network 70 for every request for establishing the communication connection between the mobile terminal 20 in the mobile communication network 50 and the service provider 60 in the data communication network 70 originating from an application 10 or type of application of the mobile terminal 20.

According to a preferred embodiment of the invention the mobile communication network 50 is designed according to a telecommunication standard like 2G, 3G, 4G, 5G, Wireless LAN or WiMAX. If the mobile communication network 50 corresponds to the 4G standard, the network element 30 is for example a mobility management entity (MME) and the gateway 40 is a packet data network gateway (PGW).

The mobile terminal 20 and the network element 30 shown in Fig. 1 are adapted to perform the method steps according to the invention performed by such a mobile terminal 20 respectively network element 30.

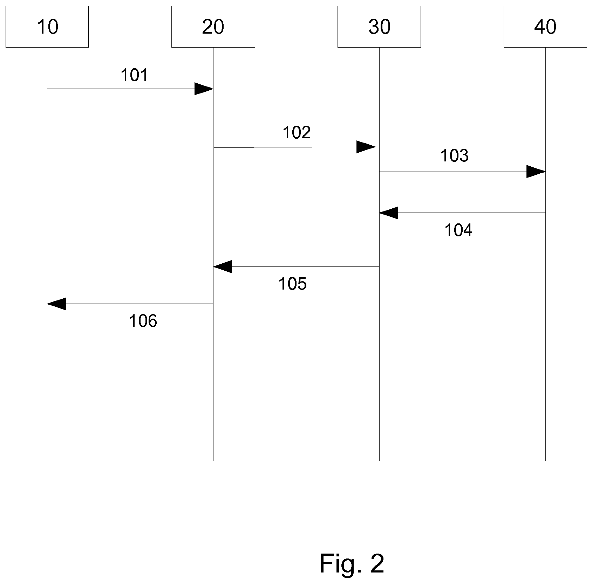

Fig. 2 shows a signal flow diagram of an embodiment of the inventive method. The invention bases on the fact, that the mobile terminal 20 is connected or attached to the mobile communication network 50. The application 10 running on the mobile terminal 20 wants to establish a communication connection, for example an IP and/or data connection, to the service provider 60 in the data communication network 70.

To establish the communication connection between the mobile terminal 20 in the mobile communication network 50 and the service provider 60 in the data communication network 70 the application 10 running on the mobile terminal 20 sends a request 101 for establishing the communication connection between the mobile terminal 20 in the mobile communication network 50 and the service provider 60 in the data communication network 70 to the mobile terminal 20. The mobile terminal 20 will send a corresponding request 102 to the network element 30 of the mobile communication network 30.

As in detail explained with respect to Fig. 1 the application 10 or type of application requesting the communication connection between the mobile terminal 20 and the service provider 60 is determined, as well as the location of the mobile terminal 20 in the mobile communication network 50.

After the network element 30 of the mobile communication network 50 has identified a gateway 40 between the mobile communication network 50 and the data communication network 70 for the requested communication connection between the mobile terminal 20 and the service provider 60 the network element 30 of the mobile communication network 50 sends a request 104 to the identified gateway 40 to establish a communication connection between the network element 30 and the gateway 40, like for example a request for establishing a bearer between the network element 30 and the gateway 40. If the mobile communication network 50 corresponds to the Long Term Evolution (LTE) standard, the network element 30 is a mobility management entity (MME) and the gateway 40 is a packet data network gateway (PGW) and between the MME and the PGW a bearer service is established for the communication connection between the mobile terminal 20 and the service provider 60.

The gateway 40 sends a response 104 to the network element 30 of the mobile communication network 50 in which the communication connection between the network element 30 and the gateway 40 is acknowledged.

Afterwards the network element 30 sends a response 105 to the mobile terminal 20 in which the request for establishing the communication connection between the mobile terminal 20 and the service provider 60 is acknowledged. This response 105 may contain information about the communication connection between the network element 30 and the gateway 40.

Finally, the mobile terminal 20 sends a response 106 to the application 10 in which the request for establishing the communication connection between the mobile terminal 20 and the service provider 60 is acknowledged.

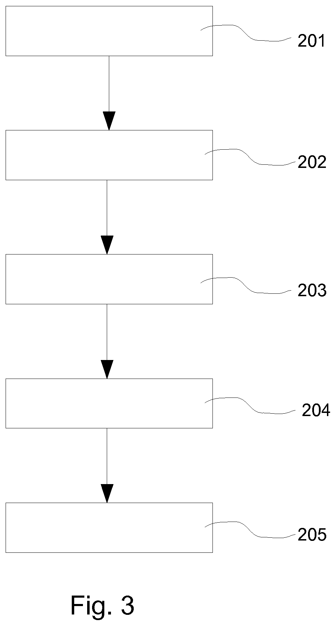

Fig. 3 shows a flow diagram of the inventive method. The invention bases on the fact, that the mobile terminal 20 is connected or attached to the mobile communication network 50. The application 10 running on the mobile terminal 20 wants to establish a communication connection, for example an IP and/or data connection, to the service provider 60 in the data communication network 70.

First, a request for establishing the communication connection between the mobile terminal 20 in the mobile communication network 50 and the service provider 60 in the data communication network 70 originating from an application 10 or type of application of the mobile terminal 20 is send 201 to the network element 30 of the mobile communication network 50.

According to the invention the application 10 or type of application requesting the communication connection between the mobile terminal 20 and the service provider 60 is determined 202.

Further, the location of the mobile terminal 20 in the mobile communication network 50 is determined 203.

Details regarding the determination 202 of the application 10 or type of application requesting the communication connection and regarding the determination 203 of the location of the mobile terminal in the mobile communication network 50 have been disclosed with respect to the embodiment of Fig. 1, which also apply to the embodiment of Figs. 2 and 3.

By considering the determined 202 application 10 or type of application requesting the communication connection and the determined 203 location of the mobile terminal 20 in the mobile communication network 50 the network element 30 of the mobile communication network 50 identifies 204 the gateway 40 between the mobile communication network 50 and the data communication network 70 for the requested communication connection between the mobile terminal 20 and the service provider 60.

Finally, the requested communication connection between the mobile terminal 20 in the mobile communication network 50 and the service provider in the data communication network 70 is established 205 by the network element 30 of the mobile communication network 50 via the identified 204 gateway 40 between the mobile communication network 50 and the data communication network 70.

### List of references

- 10: application
- 20: mobile terminal
- 30: network element
- 40: gateway
- 50: mobile communication network
- 60: service provider
- 70: data communication network
- 101: request send from application to mobile terminal
- 102: request send from mobile terminal to network element
- 103: create connection request
- 104: create connection response
- 105: request response send from network element to mobile terminal
- 106: request response send from mobile terminal to application
- 201: sending request
- 202: determining application or type of application
- 203: determining location of mobile terminal
- 204: identifying gateway
- 205: establishing communication connection

## Claims

1. Method for establishing (205) a communication connection, preferably an IP and/or data connection, between a mobile terminal (20) in a mobile communication network (50) and a service provider (60) in a data communication network (70), comprising the steps of:
- sending (101, 102, 201), from an application running on the mobile terminal (20), a request for establishing (205) the communication connection between the mobile terminal (20) in the mobile communication network (50) and the service provider (60) in the data communication network (70) to a network element (30) of the mobile communication network (50),
- determining (202), by the network element (30), the application (10) or type of application requesting (101, 102, 201) the communication connection;
- determining (203), by the network element (30), the location of the mobile terminal (20) in the mobile communication network (50);
- identifying (204), by the network element (30), a gateway (40) between the mobile communication network (50) and the data communication network (70) by the network element (30) of the mobile communication network (50) for the requested (101, 102, 201) communication connection by considering the determined (202) application (10) or type of application (10) requesting (101, 102, 201) the communication connection and the determined (203) location of the mobile terminal (20) in the mobile communication network (50); and
- establishing (205), by the network element (30), the requested (101, 102, 201) communication connection between the mobile terminal (20) in the mobile communication network (50) and the service provider (60) in the data communication network (70) by the network element (30) of the mobile communication network (50) via the identified (204) gateway (40) between the mobile communication network (50) and the data communication network (70),
**characterized in that**
different applications (10) with similar requirements regarding communication connections are grouped by the network element (30) to a type of application (10), and
establishing (205) the requested (101, 102, 201) communication
connection comprises the network element (30) sending a request to the identified gateway (40) to establish a communication connection between the network element (30) and the gateway (40) for establishing a bearer between the network element (30) and the gateway (40).

2. Method according to claim 1, wherein the application (10) or type of application requesting (101, 102, 201) the communication connection is determined (202) by the mobile terminal (20) or the network element (30) of the mobile communication network (50).

3. Method according to claim 1 or claim 2, wherein the application (10) or type of application requesting (101, 102, 201) the communication connection is determined (202) by considering the communication address of the service provider (60), the kind of requested service, the kind of the requested (101, 102, 201) communication connection and/or the name of the application (10) requesting (101, 102, 201) the communication connection.

4. Method according to any of claims 1 to 3, wherein the application (10) or type of application is assigned an identifier, wherein the identifier is at least known to the mobile terminal (20) and the network element (30) of the mobile communication network (50).

5. Method according to claim 4, wherein the identifier of the application (10) or type of application requesting (101, 102, 201) the communication connection is assigned by the mobile terminal (20), the network element (30) of the mobile communication network (50) and/or the application (10) or type of application requesting (101, 102, 201) the communication connection.

6. Method according to claim 5, wherein the network element (30) of the mobile communication network (50) receiving the identifier of the application (10) or type of application requesting (101, 102, 201) the communication connection checks the received identifier of the application (10) or type of application requesting (101, 102, 201) the communication connection.

7. Method according to claim 6, wherein the check bases on the communication address of the service provider (60), the kind of requested service, the kind of the requested (101, 102, 201) communication connection and/or the name of the application (10) requesting (101, 102, 201) the communication connection.

8. Method according to any of claims 1 to 7, wherein the location of the mobile terminal (20) in the mobile communication network (50) is determined (202) by a cell of the mobile communication network (50) where the mobile terminal (20) resides, a GPS position of the mobile terminal (20) transmitted from the mobile terminal (20) to the network element (30) of the mobile communication network (50) and/or a triangulation process using transmission times of transmitted signals.

9. Method according to any of claims 1 to 8, wherein the gateway (40) between the mobile communication network (50) and the data communication network (70) is identified (204) by the network element (30) of the mobile communication network (50) by considering the determined (202) application (10) or type of application requesting (101, 102, 201) the communication connection and the determined (203) location of the mobile terminal (20) in the mobile communication network (50) with respect to transmission times, latency, available bandwidth, network congestion, number of communication networks and/or network elements involved, quality of service, security characteristics of the communication connection, the real distance between the mobile terminal (20) and the service provider (60), the capacity and/or current workload of the service provider (60), or any combination thereof.

10. Method according to any of claims 1 to 9, wherein the gateway (40) between the mobile communication network (50) and the data communication network (70) is dynamically identified (204) by the network element (30) of the mobile communication network (50) for every request (101, 102, 201) for establishing (205) a specific communication connection between the mobile terminal (20) in the mobile communication network (50) and a specific service provider (60) in the data communication network (70) originating from a specific application (10) or type of application of the mobile terminal (20).

11. Method according to any of claims 1 to 10, wherein the mobile communication network (50) is designed according to a telecommunication standard like 2G, 3G, 4G, 5G, Wireless LAN or WiMAX.

12. Method according to any of claims 1 to 11, wherein the network element (30) is a mobility management entity, MME, of a mobile communication network (50) according to the 4G standard.

13. Method according to any of claims 1 to 12, wherein the gateway (40) between the mobile communication network (50) and the data communication network (70) is a data packet network gateway, PGW, of a mobile communication network (50) according to the 4G standard.

14. Mobile communication network (50), comprising
a mobile terminal (20) adapted to perform the method steps of:
- sending (101, 102, 201), from an application running on the mobile terminal (20), a request for establishing (205) a communication connection with a service provider (60) in a data communication network (70) to a network element (30) of the mobile communication network (50);
- establishing (205) the requested (101, 102, 201) communication connection with the service provider (60) in the data communication network (70) via the identified (204) gateway (40) between the mobile communication network (50) and the data communication network (70);
and
the network element (30) adapted to perform the method steps of:
- determining (202) the application (10) or type of application (10) requesting (101, 102, 201) a communication connection;
- determining (203) the location of the mobile terminal (20) in the mobile communication network (50);
- identifying (204) a gateway (40) between the mobile communication network (50) and the data communication network (70) for the requested (101, 102, 201) communication connection by considering the determined (202) application (10) or type of application (10) requesting (101, 102, 201) the communication connection and the determined (203) location of the mobile terminal (20) in the mobile communication network (50); and
- establishing (205) the requested (101, 102, 201) communication connection between the mobile terminal (20) in the mobile communication network (50) and a service provider (60) in the data communication network (70),
**characterized in that**
different applications (10) with similar requirements regarding communication connections are grouped by the network element (30) to a type of application by the mobile terminal (20), and
establishing (205) the requested (101, 102, 201) communication
connection comprises sending a request to the identified gateway (40) to establish a communication connection between the network element (30) and the gateway (40) for establishing a bearer between the network element (30) and the gateway (40).

## Patentansprüche

1. Verfahren zum Aufbau (205) einer Kommunikationsverbindung, vorzugsweise einer IP- und/oder Datenverbindung, zwischen einem mobilen Endgerät (20) in einem mobilen Kommunikationsnetz (50) und einem Dienstanbieter (60) in einem Datenkommunikationsnetz (70), mit den Schritten:
- Senden (101, 102, 201) einer Anfrage zum Aufbau (205) der Kommunikationsverbindung zwischen dem mobilen Endgerät (20) in dem mobilen Kommunikationsnetz (50) und dem Dienstanbieter (60) in dem Datenkommunikationsnetz (70) von einer auf dem mobilen Endgerät (20) laufenden Anwendung an ein Netzelement (30) des mobilen Kommunikationsnetzes (50),
- Bestimmen (202) der Anwendung (10) oder der Art der Anwendung, welche die Kommunikationsverbindung anfragt (101, 102, 201), durch das Netzelement (30);
- Bestimmen (203) des Aufenthaltsortes des mobilen Endgerätes (20) in dem mobilen Kommunikationsnetz (50) durch das Netzelement (30);
- Identifizieren (204) einer Schnittstelle (40) zwischen dem mobilen Kommunikationsnetz (50) und dem Datenkommunikationsnetz (70) durch das Netzelement (30) des mobilen Kommunikationsnetzes für die angefragte (101, 102, 201) Kommunikationsverbindung unter Berücksichtigung der bestimmten (202) Anwendung (10) oder Anwendungsart (10), welche die Kommunikationsverbindung anfragt (101, 102, 201) und des bestimmten (203) Aufenthaltsortes des mobilen Endgerätes (20) in dem mobilen Kommunikationsnetz (50); und
- Aufbau (205) der angefragten (101, 102, 201) Kommunikationsverbindung zwischen dem mobilen Endgerät (20) in dem mobilen Kommunikationsnetz (50) und dem Dienstanbieter (60) in dem Datenkommunikationsnetz (70) durch das Netzelement (30) des mobilen Kommunikationsnetzes (50) über die identifizierte (204) Schnittstelle (40) zwischen dem mobilen Kommunikationsnetz (50) und dem Datenkommunikationsnetz (70),
**dadurch gekennzeichnet, dass**
verschiedene Anwendungen (10) mit ähnlichen Bedingungen bezüglich Kommunikationsverbindungen von dem Netzelement (30) zu einer Anwendungsart (10) gruppiert werden und
der Aufbau (205) der angefragten (101, 102, 201) Kommunikationsverbindung umfasst, dass eine Anfrage an die identifizierte Schnittstelle (40) gesendet wird, eine Kommunikationsverbindung zwischen dem Netzelement (30) und der Schnittstelle (40) aufzubauen, um einen Träger zwischen dem Netzelement (30) und der Schnittstelle (40) aufzubauen.

2. Verfahren nach Anspruch 1, wobei die Anwendung (10) oder Anwendungsart, welche die Kommunikationsverbindung anfragt (101, 102, 201) von dem mobilen Endgerät (20) oder dem Netzelement (30) des mobilen Kommunikationsnetzes (50) bestimmt wird (202).

3. Verfahren nach Anspruch 1 oder Anspruch 2, wobei die Anwendung (10) oder Anwendungsart, welche die Kommunikationsverbindung anfragt (101, 102, 201), unter Berücksichtigung der Kommunikationsadresse des Dienstanbieters (60), der Art des angefragten Dienstes, der Art der angefragten (101, 102, 201) Kommunikationsverbindung und/oder des Namens der Anwendung, welche die Kommunikationsverbindung anfragt (101, 102, 201), bestimmt wird.

4. Verfahren nach einem der Ansprüche 1 bis 3, wobei der Anwendung (10) oder Anwendungsart eine Kennung zugeordnet wird, wobei die Kennung zumindest dem mobilen Endgerät (20) und dem Netzelement (30) des mobilen Netzwerkes (50) bekannt ist.

5. Verfahren nach Anspruch 4, wobei die Kennung der Anwendung (10) oder Anwendungsart, welche die Kommunikationsverbindung anfragt (101, 102, 201), von dem mobilen Endgerät (20), dem Netzelement (30) des mobilen Kommunikationsnetzes (50) und/oder der Anwendung (20) oder Anwendungsart, welche die Kommunikationsverbindung anfragt (101, 102, 201), zugeordnet wird.

6. Verfahren nach Anspruch 5, wobei das Netzelement (30) des mobilen Kommunikationsnetzes (50), das die Kennung der Anwendung (10) oder Anwendungsart, welche die Kommunikationsverbindung anfragt (101, 102, 201), empfängt, die empfangene Kennung der Anwendung (10) oder Anwendungsart, welche die Kommunikationsverbindung anfragt (101, 102, 201), überprüft.

7. Verfahren nach Anspruch 6, wobei die Überprüfung auf der Kommunikationsadresse des Dienstanbieters (60), der Art des angefragten Dienstes, der Art der angefragten (101, 102, 201) Kommunikationsverbindung und/oder dem Namen der Anwendung (20), welche die Kommunikationsverbindung anfragt (101, 102, 201), basiert.

8. Verfahren nach einem der Ansprüche 1 bis 7, wobei der Aufenthaltsort des mobilen Endgerätes (20) in dem mobilen Kommunikationsnetz (50) von einer Zelle des mobilen Kommunikationsnetzes (50), wo sich das mobile Endgerät (20) aufhält, einer GPS-Position des mobilen Endgerätes (20), die von dem mobilen Endgerät (20) an das Netzelement (30) des mobilen Kommunikationsnetzes (50) übertragen wird, und/oder einem Triangulationsverfahren unter Verwendung von Übertragungszeiten übertragener Signale bestimmt wird (202).

9. Verfahren nach einem der Ansprüche 1 bis 8, wobei die Schnittstelle (40) zwischen dem mobilen Kommunikationsnetz (50) und dem Datenkommunikationsnetz (70) identifiziert wird (204) von dem Netzelement (30) des mobilen Kommunikationsnetzes (50) unter Berücksichtigung der bestimmten (202) Anwendung (10) oder Anwendungsart, welche die Kommunikationsverbindung anfragt (101, 102, 201), und des bestimmten (203) Aufenthaltsortes des mobilen Endgerätes (20) in dem mobilen Kommunikationsnetz (50) bezüglich Übertragungszeiten, Latenz, verfügbarer Bandbreite, Netzüberlastung, Anzahl an Kommunikationsnetzen und/oder beteiligten Netzelementen, Dienstqualität, Sicherheitsmerkmalen der Kommunikationsverbindung, des realen Abstandes zwischen dem mobilen Endgerät (20) und dem Dienstanbieter (60), der Kapazität und/oder aktuellen Auslastung des Dienstanbieters (60) oder irgendeiner Kombination daraus.

10. Verfahren nach einem der Ansprüche 1 bis 9, wobei die Schnittstelle (40) zwischen dem mobilen Kommunikationsnetz (50) und dem Datenkommunikationsnetz (70) von dem Netzelement (30) des mobilen Kommunikationsnetzes (50) für jede Anfrage (101, 102, 201) dynamisch identifiziert wird (204), um eine spezifische Kommunikationsverbindung zwischen dem mobilen Endgerät (20) in dem mobilen Kommunikationsnetz (50) und einem spezifischen Dienstanbieter (60) in dem Datenkommunikationsnetz (70) aufzubauen, die aus einer spezifischen Anwendung (10) oder Anwendungsart des mobilen Endgerätes (20) stammt.

11. Verfahren nach einem der Ansprüche 1 bis 10, wobei das mobile Kommunikationsnetz (50) gemäß einem Telekommunikationsstandard wie 2G, 3G, 4G, 5G, Wireless-LAN oder WiMAX ausgebildet ist.

12. Verfahren nach einem der Ansprüche 1 bis 11, wobei das Netzelement (30) eine Mobilitätsmanagementeinheit, MME, eines mobilen Kommunikationsnetzes (50) gemäß dem 4G-Standard ist.

13. Verfahren nach einem der Ansprüche 1 bis 12, wobei die Schnittstelle (40) zwischen dem mobilen Kommunikationsnetz (50) und dem Datenkommunikationsnetz (70) ein Datenpaketnetzwerkzugang, PGW eines mobilen Kommunikationsnetzes (50) gemäß dem 4G-Standard ist.

14. Mobiles Kommunikationsnetz (50) mit
einem mobilen Endgerät (20), das dafür eingerichtet ist, die folgenden Verfahrensschritte durchzuführen:
- Senden (101, 102, 201) einer Anfrage zum Aufbau (205) einer Kommunikationsverbindung mit einem Dienstanbieter (60) in einem Datenkommunikationsnetz (70) von einer auf dem mobilen Endgerät (20) laufenden Anwendung an ein Netzelement (30) des mobilen Kommunikationsnetzes (50);
- Aufbau (205) der angefragten (101, 102, 201) Kommunikationsverbindung mit dem Dienstanbieter (60) in dem Datenkommunikationsnetz (70) über die identifizierte (204) Schnittstelle (40) zwischen dem mobilen Kommunikationsnetz (50) und dem Datenkommunikationsnetz (70);
und
wobei das Netzelement (30) dafür eingerichtet ist, die folgenden Verfahrensschritte durchzuführen:
- Bestimmen (202) der Anwendung (10) oder der Art der Anwendung, welche eine Kommunikationsverbindung anfragt (101, 102, 201);
- Bestimmen (203) des Aufenthaltsortes des mobilen Endgerätes (20) in dem mobilen Kommunikationsnetz (50);
- Identifizieren (204) einer Schnittstelle (40) zwischen dem mobilen Kommunikationsnetz (50) und dem Datenkommunikationsnetz (70) für die angefragte (101, 102, 201) Kommunikationsverbindung unter Berücksichtigung der bestimmten (202) Anwendung (10) oder Anwendungsart (10), welche die Kommunikationsverbindung anfragt (101, 102, 201) und des bestimmten (203) Aufenthaltsortes des mobilen Endgerätes (20) in dem mobilen Kommunikationsnetz (50); und
- Aufbau (205) der angefragten (101, 102, 201) Kommunikationsverbindung zwischen dem mobilen Endgerät (20) in dem mobilen Kommunikationsnetz (50) und einem Dienstanbieter (60) in dem Datenkommunikationsnetz (70),
**dadurch gekennzeichnet, dass**
verschiedene Anwendungen (10) mit ähnlichen Bedingungen bezüglich Kommunikationsverbindungen von dem mobilen Endgerät (20) zu einer Anwendungsart (10) gruppiert werden und
der Aufbau (205) der angefragten (101, 102, 201) Kommunikationsverbindung umfasst, dass eine Anfrage an die identifizierte Schnittstelle (40) gesendet wird, eine Kommunikationsverbindung zwischen dem Netzelement (30) und der Schnittstelle (40) aufzubauen, um einen Träger zwischen dem Netzelement (30) und der Schnittstelle (40) aufzubauen.

## Revendications

1. Procédé destiné à établir (205) une liaison de communication, de préférence une connexion IP et/ou une connexion de données, entre un terminal mobile (20) dans un réseau de communication mobile (50) et un fournisseur de services (60) dans un réseau de communication de données (70), comprenant les étapes de:
- envoyer (101, 102, 201) à partir d'une application, qui fonctionne sur le terminal mobile (20), une demande d'établir (205) la liaison de communication entre le terminal mobile (20) dans le réseau de communication mobile (50) et le fournisseur de services (60) dans le réseau de communication de données (70) à un élément de réseau (30) du réseau de communication mobile (50),
- déterminer (202) l'application (10) ou le type d'application demandant (101, 102, 201) la liaison de communication par l'élément de réseau (30);
- déterminer (203) l'emplacement du terminal mobile (20) dans le réseau de communication mobile (50) par l'élément de réseau (30);
- identifier (204) une passerelle (40) entre le réseau de communication mobile (50) et le réseau de communication de données (70) par l'élément de réseau (30) du réseau de communication mobile (50) pour la liaison de communication demandée (101, 102, 201) en tenant compte de l'application (10) ou du type d'application (10) demandant (101, 102, 201) la liaison de communication et de l'emplacement déterminé (203) du terminal mobile (20) dans le réseau de communication mobile (50); et
- établir (205) la liaison de communication demandée (101, 102, 201) entre le terminal mobile (20) dans le réseau de communication mobile (50) et le fournisseur de services (60) dans le réseau de communication de données (70) par l'élément de réseau (30) du réseau de communication mobile (50) via la passerelle (40) identifiée (204) entre le réseau de communication mobile (50) et le réseau de communication de données (70),
**caractérisé en ce que**
des applications différentes (10) ayant des exigences similaires par rapport à des liaisons de communication sont groupées par l'élément de réseau (30) dans un type d'application (10) et
l'établissement (205) de la liaison de communication demandée (101, 102, 201) comprend le fait que l'élément de réseau (30) envoie une demande à la passerelle (40) identifiée d'établir une liaison de communication entre l'élément de réseau (30) et la passerelle (40) pour établir un porteur entre l'élément de réseau (30) et la passerelle (40).

2. Procédé selon la revendication 1, dans lequel l'application (10) ou le type d'application demandant (101, 102, 201) la liaison de communication est déterminé (202) par le terminal mobile (20) ou par l'élément de réseau (30) du réseau de communication mobile (50).

3. Procédé selon la revendication 1 ou la revendication 2, dans lequel l'application (10) ou le type d'application demandant (101, 102, 201) la liaison de communication est déterminé (202) en tenant compte de l'adresse de communication du fournisseur de services (60), du type du service demandé, du type de la liaison de communication demandée (101, 102, 201) et/ou du nom de l'application (10) demandant (101, 102, 201) la liaison de communication.

4. Procédé selon l'une quelconque des revendications 1 à 3, dans lequel un identifiant est attribué à l'application (10) ou au type d'application, l'identifiant étant au moins connu au terminal mobile (20) et à l'élément de réseau (30) du réseau de communication mobile (50).

5. Procédé selon la revendication 4, dans lequel l'identifiant de l'application (10) ou du type d'application demandant (101, 102, 201) la liaison de communication est attribué par le terminal mobile (20), par l'élément de réseau (30) du réseau de communication mobile (50) et/ou par l'application (10) ou par le type d'application demandant (101, 102, 201) la liaison de communication.

6. Procédé selon la revendication 5, dans lequel l'élément de réseau (30) du réseau de communication mobile (50) recevant l'identifiant de l'application (10) ou du type d'application demandant (101, 102, 201) la liaison de communication vérifie l'identifiant reçu de l'application (10) ou du type d'application demandant (101, 102, 201) la liaison de communication.

7. Procédé selon la revendication 6, dans lequel la vérification est basée sur l'adresse de communication du fournisseur de services (60), le type du service demandé, le type de la liaison de communication demandée (101, 102, 201) et/ou le nom de l'application (10) demandant (101, 102, 201) la liaison de communication.

8. Procédé selon l'une quelconque des revendications 1 à 7, dans lequel l'emplacement du terminal mobile (20) dans le réseau de communication mobile (50) est déterminé (202) par une cellule du réseau de communication mobile (50), où le terminal mobile (20) réside, une position GPS du terminal mobile (20) transmise du terminal mobile (20) à l'élément de réseau (30) du réseau de communication mobile (50) et/ou par un procédé de triangulation en utilisant des périodes de transmission de signaux transmis.

9. Procédé selon l'une quelconque des revendications 1 à 8, dans lequel la passerelle (40) entre le réseau de communication mobile (50) et le réseau de communication de données (70) est identifiée (204) par l'élément de réseau (30) du réseau de communication mobile (50) en tenant compte de l'application (10) ou du type d'application déterminé(e) demandant (101, 102, 201) la liaison de communication et de l'emplacement déterminé (203) du terminal mobile (20) dans le réseau de communication mobile (50) par rapport à des temps de transmission, à la latence, à la bande passante disponible , à une congestion du réseau, au nombre de réseaux de communication et/ou d'éléments de réseau impliqués, à la qualité de service, à des caractéristiques de sécurité de la liaison de communication, à la distance réelle entre le terminal mobile (20) et le fournisseur de services (60), à la capacité et/ou à la charge de travail actuelle du fournisseur de services (60), ou à une combinaison quelconque de ceux-ci.

10. Procédé selon l'une quelconque des revendications 1 à 9, dans lequel la passerelle (40) entre le réseau de communication mobile (50) et le réseau de communication de données (70) est identifiée (204) de manière dynamique par l'élément de réseau (30) du réseau de communication mobile (50) pour chaque demande (101, 102, 201) d'établir (205) une liaison de communication spécifique entre le terminal mobile (20) dans le réseau de communication mobile (50) et un fournisseur de services (60) spécifique dans le réseau de communication de données (70) provenant d'une application spécifique (10) ou d'un type d'application du terminal mobile (20).

11. Procédé selon l'une quelconque des revendications 1 à 10, dans lequel le réseau de communication mobile (50) est conçu selon un standard de télécommunication tel que 2G, 3G, 4G, 5G, Wireless-LAN ou WiMAX.

12. Procédé selon l'une quelconque des revendications 1 à 11, dans lequel l'élément de réseau (30) est une entité de gestion de mobilité (MME) d'un réseau de communication mobile (50) selon le standard 4G.

13. Procédé selon l'une quelconque des revendications 1 à 12, dans lequel la passerelle (40) entre le réseau de communication mobile (50) et le réseau de communication de données (70) est une passerelle de réseau de paquets de données, PGW, d'un réseau de communication mobile (50) selon le standard 4G.

14. Réseau de communication mobile (50), comprenant:
un terminal mobile (20) adapté à effectuer les étapes de procédé de:
- envoyer (101, 102, 201) à partir d'une application, qui fonctionne sur le terminal mobile (20), une demande d'établir (205) une liaison de communication avec un fournisseur de services (60) dans un réseau de communication de données (70) à un élément de réseau (30) du réseau de communication mobile (50);
- établir (205) la liaison de communication demandée (101, 102, 201) avec le fournisseur de services (60) dans le réseau de communication de données (70) via la passerelle (40) identifiée (204) entre le réseau de communication mobile (50) et le réseau de communication de données (70);
et
l'élément de réseau (30) adapté à effectuer les étapes de procédé de:
- déterminer (202) l'application (10) ou le type d'application demandant (101, 102, 201) la liaison de communication;
- déterminer (203) l'emplacement du terminal mobile (20) dans le réseau de communication mobile (50);
- identifier (204) une passerelle (40) entre le réseau de communication mobile (50) et le réseau de communication de données (70) par l'élément de réseau (30) du réseau de communication mobile (50) pour la liaison de communication demandée (101, 102, 201) en tenant compte de l'application (10) ou du type d'application (10) déterminé(e) (202) demandant (101, 102, 201) la liaison de communication et de l'emplacement déterminé (203) du terminal mobile (20) dans le réseau de communication mobile (50); et
- établir (205) la liaison de communication demandée (101, 102, 201) entre le terminal mobile (20) dans le réseau de communication mobile (50) et un fournisseur de services (60) dans le réseau de communication de données (70),
**caractérisé en ce que**
des applications différentes (10) ayant des exigences similaires par rapport à des liaisons de communication sont groupées par l'élément de réseau (30) dans un type d'application (10) par le terminal mobile (20), et
- l'établissement (205) de la liaison de communication demandée (101, 102, 201) comprend le fait qu'une demande est envoyée à la passerelle (40) identifiée d'établir une liaison de communication entre l'élément de réseau (30) et la passerelle (40) pour établir un porteur entre l'élément de réseau (30) et la passerelle (40).
